# EUROPÄISCHE PATENTSCHRIFT

(11) **EP 3 666 224 B1**
(45) Veröffentlichungstag und Bekanntmachung des Hinweises auf die Patenterteilung: **12.07.2023**
(21) Anmeldenummer: 18211513.9
(22) Anmeldetag: 11.12.2018
(51) Int. Cl.: A61C 8/00

(54) **ZAHNERSATZ MIT VERBINDUNGSHÜLSE UND BAUSATZ**
DENTAL PROSTHESIS WITH CONNECTION SLEEVE AND KIT
PROTHÈSE DENTAIRE POURVUE DE MANCHON DE RACCORDEMENT ET KIT

(43) Veröffentlichungstag der Anmeldung: 17.06.2020
(73) Patentinhaber: 3CI GmbH (iG), 74924 Neckarbischofsheim (DE)
(72) Erfinder: RAISER, Christoph, 44350 Guérande (FR)
(74) Vertreter: Götz, Georg Alois

(56) Entgegenhaltungen:
- KR-B1- 100 668 368
- US-A- 5 116 225
- US-A1- 2003 224 328
- US-A1- 2011 053 114

## Beschreibung

Die Erfindung betrifft einen Zahnersatz zur Verankerung im Kieferknochen, umfassend ein Zahnimplantat mit einem Implantatkörper und einem Aufbauelement, ein Zahnteil mit einer das Zahnteil durchsetzenden Innenführung und einen Verschlusskörper, welcher zum Versiegeln des Zahnersatzes innerhalb der das Zahnteil durchsetzenden Innenführung anordenbar ist. Die Erfindung betrifft außerdem einen Bausatz zum Versiegeln eines Zahnersatzes, insbesondere eines Zahnersatzes zur Verankerung im Kieferknochen, mit einem Verschlusskörper und einer Verbindungshülse.

Die vorliegende Erfindung ist im zahnmedizinischen Bereich der Implantatprothetik angesiedelt. Im Falle des Verlustes der eigenen Zahnwurzel bietet ein Zahnimplantat eine Befestigungsmöglichkeit für den eigentlichen Zahnersatz, welcher auch als Zahnteil oder Prothetik bezeichnet wird, bspw. eine Krone. Das Zahnimplantat wird in den Kieferknochen des Patienten eingepflanzt und fungiert dort als Zahnwurzelersatz und Träger für das Zahnteil. Der Aufbau eines Zahnimplantats besteht aus dem Implantatkörper, welcher üblicherweise aus Titan hergestellt und mittels eines Schraubgewindes in den Kieferknochen eingedreht wird und aus dem auch als Abutment bezeichneten Aufbauelement, welches aus dem Kieferknochen herausragt, um an diesem das Zahnteil, insbesondere eine Krone, zu befestigen. Grundsätzlich wird zwischen einteiligen und zweiteiligen Zahnimplantaten unterschieden. Beim einteiligen Zahnimplantat sind der Implantatkörper und das Aufbauelement integral, d.h. einstückig, ausgebildet. Beim zweiteiligen Zahnimplantat sind der Implantatkörper und das Aufbauelement als zwei Einzelstücke, voneinander getrennt ausgeführt. Erst nachdem die Einheilung des in den Kieferknochen eingesetzten Implantatkörpers abgeschlossen ist, wird hier der Implantatkörper über ein Verbindungselement, üblicherweise eine Zahnimplantatschraube, mit dem Aufbauelement verbunden. Sowohl der Implantatkörper als auch das Aufbauelement weisen hierzu einen innenliegenden Verbindungsabschnitt auf, der zweckmäßigerweise mit einem Innengewinde versehen ist. Anschließend wird das Zahnteil, insbesondere die Krone, mit dem Aufbauelement verbunden.

Auch bezüglich des Zahnteils bzw. der Krone ist grundsätzlich zwischen zwei gängigen Varianten zu unterscheiden. Bei einer Variante wird das Zahnteil mit einer komplementär zum Aufbauelement ausgebildeten, unteren Ausnehmung versehen und mit dem Aufbauelement verklebt. Ein nachträgliches Lösen oder ein Wechsel des Zahnteils ist hier nicht oder nur unter starker Belastung des im Kieferknochen verankerten Implantats möglich. Bei der anderen Variante ist das Zahnteil von einer Innenführung, insbesondere von einem zylindrisch ausgebildeten Kanal, durchsetzt und wird mit dem Aufbauelement verklebt, bevor das Aufbauelement und der Implantatkörper miteinander verbunden werden. Durch den Kanal bzw. die Innenführung kann dann die zur Verbindung vorgesehene Schraube geführt und eingeschraubt werden. Um das Eindringen von Bakterien zu vermeiden muss der Kanal, nachdem das Zahnteil befestigt wurde, verschlossen werden. Dies wird üblicherweise mittels eines polymeren Klebstoffs realisiert, welcher im verformbaren Zustand in den Kanal eingefüllt und anschließend darin ausgehärtet wird. Nachteilig an dem polymeren Klebstoff ist, dass nicht nur der Kanal versiegelt wird, gleichzeitig wird auch die Schraube innerhalb des Kanals verklebt, wodurch ein zerstörungsfreies Entfernen der Krone nicht länger möglich ist.

Aus dem Stand der Technik, nämlich der DE 20 2013 105 551 U1 ist ein festsitzender Zahnersatz mit einer Suprakonstruktion und einem Zahnimplantat, welche über ein innerhalb eines Kanals angeordnetes Verbindungselement miteinander befestigt sind, bekannt. Um den Kanal zu verschließen ist ein Verschlusselement vorgesehen, welches mittels einer sogenannten lösbaren Verriegelungsvorrichtung ebenfalls lösbar in der Suprakonstruktion zu befestigen ist. Die lösbare Verbindung zwischen Verriegelungsvorrichtung und Suprakonstruktion wird mittels eines Gewindes realisiert, wobei die Verriegelungsvorrichtung ein Außengewinde aufweist und die Suprakonstruktion selbst mit einem Innengewinde versehen ist.

Auch die Druckschrift US 5,890,902 betrifft einen Zahnersatz mit einem Wurzelabschnitt und einem Kronenabschnitt, wobei der Kronenabschnitt zur Aufnahme einer Krone vorgesehen ist. Die Krone weist einen kanalartigen Hohlraum auf, durch den eine Verbindungsstange geführt ist, um die Krone bzw. den Kronenabschnitt mit dem Wurzelabschnitt zu verbinden. Um den Hohlraum zu verschließen und gegenüber Speichel abzudichten, ist ein Verschlusselement vorgesehen, welches einen scheibenartigen Grundkörper mit einem diesen umgebenden Außengewinde aufweist. In die Oberseite des Verschlusselements ist eine Ausnehmung eingeformt, die zum Eingriff mit einem Schraubenschlüssel ausgebildet ist. Hierdurch kann das Verschlusselement in den Hohlraum eingeschraubt oder auch wieder aus der Krone entfernt werden.

US 2011/053114 A1 offenbart einen Zahnersatz mit den Merkmalen des Oberbegriffs des Anspruchs 1.

Nachteilig an den aus dem Stand der Technik bekannten Verschlusselementen ist, dass es zur Befestigung des jeweiligen Verschlusskörpers erforderlich ist, ein Innengewinde in die Suprakonstruktion bzw. den Kronenkörper selbst zu schneiden. Gerade bei Kronen oder ähnlichem Zahnersatz aus keramischen Materialien, ist das Schneiden eines Gewindes mit der erforderlichen Genauigkeit und dem erforderlichen Feinheitsgrad besonders aufwendig und kostenintensiv. Oftmals sind die hierzu notwendigen Werkzeuge, insbesondere Diamantwerkzeuge in derart kleiner Ausführung überhaupt nicht oder nur schwer erhältlich.

Es ist daher die Aufgabe der vorliegenden Erfindung, den aus dem Stand der Technik bekannten Zahnersatz zu verbessern, insbesondere eine kostengünstigere Möglichkeit zu schaffen, ein Zahnteil zerstörungsfrei von einem Zahnimplantat lösen zu können. Gleichzeitig soll auch bestehender Zahnersatz mit einem Bausatz zur Versiegelung nachrüstbar sein.

Die Aufgabe wird gelöst durch einen Zahnersatz gemäß Anspruch 1 und einen Bausatz gemäß Anspruch 12. Ein erfindungsgemäßer Zahnersatz der eingangs näher beschriebenen Art kennzeichnet sich dadurch, dass zwischen dem Verschlusskörper und der Innenführung des Zahnteils eine Verbindungshülse angeordnet ist, mittels welcher das Zahnteil und das Zahnimplantat mittelbar, insbesondere lösbar, miteinander verbindbar sind und/oder der Verschlusskörper innerhalb der das Zahnteil durchsetzenden Innenführung lösbar arretierbar ist.

Erfindungsgemäß erfüllt die Verbindungshülse, die als zusätzliches, einzelnes und insbesondere einstückiges Bauteil innerhalb der Innenführung des Zahnteils und den Verschlusskörper umgebend angeordnet ist, mehrere Funktionen. Einerseits ist vorgesehen, das Zahnteil bzw. die Prothetik, insbesondere eine Krone, durch die Verbindungshülse mittelbar mit dem Zahnimplantat zu verbinden. Anders als im Stand der Technik bekannt, wird das Zahnteil nicht länger direkt mit dem Zahnimplantat bzw. mit dessen Aufbauelement selbst verbunden, sondern mittelbar über die Verbindungshülse, wodurch Klebeverbindungen zwischen Zahnteil und Aufbauelement vermieden werden. Vorzugsweise ist diese mittelbare Verbindung lösbar ausgeführt. Andererseits kann durch die Verbindungshülse alternativ oder zusätzlich auch der Verschlusskörper innerhalb des Zahnteils fixiert werden, um die das Zahnteil durchsetzende Innenführung zu versiegeln und so das Eindringen von Speichel, Schmutz oder Bakterien zu reduzieren oder bestenfalls sogar vollständig zu vermeiden. Erfindungsgemäß wird der Verschlusskörper mittels der Verbindungshülse lösbar innerhalb des Zahnteils arretiert, wodurch dieses zerstörungsfrei, d.h. ohne Beschädigung des Zahnteils, insbesondere der Krone, oder des Zahnimplantats entfernt werden kann, um so Zugriff auf das darunterliegende Zahnimplantat und gegebenenfalls die Zahnimplantatschraube zu ermöglichen. Ferner werden durch die Verbindungshülse die Bestandteile des Zahnersatzes vor Beschädigungen geschützt, deren Herstellung besonders aufwendig und mit hohen Kosten verbunden ist, nämlich das Zahnteil und das Zahnimplantat.

Insgesamt wird erfindungsgemäß eine flexible Konstruktion ermöglicht, bei welcher einzelne Bestandteile des Zahnersatzes, das Zahnteil bzw. die Prothetik, das Aufbauelement bzw. Abutment und/oder sogar der Implantatkörper bedarfsund wahlweise aus der Mundhöhle oder aus dem Kieferknochen des Patienten entnommen werden können um gegebenenfalls gegen ein jeweiliges Ersatzteil ausgetauscht zu werden. Die übrigen Bestandteile des Zahnersatzes können dann kostensparend wieder verwendet werden.

Vorteilhafte Ausführungsformen sind in den Unteransprüchen beansprucht und werden nachfolgend näher erläutert.

So ist gemäß einer vorteilhaften Ausführung der Erfindung vorgesehen, dass das Zahnimplantat zweiteilig ausgeführt ist und einen den Implantatkörper und das Aufbauelement, auch Abutment genannt, durchsetzenden Verbindungsabschnitt sowie ein innerhalb des Verbindungsabschnitts anordenbares Verbindungselement aufweist, wobei der Verschlusskörper, innerhalb der das Zahnteil durchsetzenden Innenführung und in den das Aufbauelement durchsetzenden Verbindungsabschnitt mündend, anordenbar ist.

Wie eingangs beschrieben, ist bei einer zweiteiligen Ausführung des Zahnimplantats der Implantatkörper mit dem Aufbauelement über ein Verbindungselement verbunden. Der Implantatkörper wie auch das Aufbauelement weisen hierzu jeweils einen Verbindungsabschnitt auf, üblicherweise ist der Verbindungsabschnitt des Implantatkörpers als Innengewinde ausgebildet, wobei es sich bei dem Verbindungselement um eine Schraube handelt. Besonders zweckmäßig ist, wenn der Verschlusskörper in den Verbindungsabschnitt des Aufbauelements mündet, d.h. in diesen hineinragt. Auf diese Weise lässt sich einerseits eine exakte axiale Ausrichtung des Verschlusskörpers in Bezug sowohl auf das Zahnimplantat, als auch das Zahnteil sicherstellen. Andererseits kann der Verschlusskörper zusätzlich als Schraubensicherung bzw. Verdrehsicherung für das Zahnimplantat bzw. die Verbindungsschraube zwischen Aufbauelement und Implantatkörper wirken. Beispielsweise ist es denkbar, den unteren Abschnitt des Verschlusskörpers mit einem federartigen Vorsprung zu versehen, welcher in eine Nut oder ähnliche Ausnehmung des Schraubenkopfes der Verbindungsschraube formschlüssig eingreift.

Für die Funktion ist es nach einer Ausführungsvariante vorteilhaft, wenn der Verschlusskörper ein Außengewinde und die Verbindungshülse mindestens ein Innengewinde aufweist, um den Verschlusskörper innerhalb der das Zahnteil durchsetzenden Innenführung lösbar zu arretieren.

Das Außengewinde des Verschlusskörpers und das mindestens eine Innengewinde der Verbindungshülse bilden miteinander eine Gewindeverbindung aus, mittels welcher der Verschlusskörper in die Verbindungshülse eingedreht und auch aus dieser wieder ausgedreht werden kann. Anstelle des Zahnteils selbst wird also die Verbindungshülse mit dem Innengewinde versehen. Bei dieser Vorgehensweise ist besonders vorteilhaft, dass der Verschlusskörper und die Verbindungshülse aufeinander abgestimmt hergestellt werden können und dann mit einem standardisierten Zahnteil verwendbar sind. Die Gewindeverbindung bringt zusätzlich eine axiale Anpresskraft in Richtung des Zahnimplantats auf, wodurch etwaige Mikrospalte, z.B. zwischen Implantatkörper und Aufbauelement verringert, insbesondere geschlossen werden und insgesamt ein besserer, vorzugsweise bakterien- und/oder keimfreier, Sitz des Zahnersatzes erlangt wird. Zwischen der Verbindungshülse und dem Zahnteil, genauer dessen Innenführung, wird durch Eindrehen des Verschlusskörpers ein Kraft- und/oder Reibschluss ausgebildet. Vorzugsweise fungiert die Verbindungshülse hierbei wie eine Art Dübel, wobei durch den eingedrehten Verschlusskörper eine radial nach außen, in Richtung des umgebenden Zahnteils, gerichtete Anpresskraft ausgeübt wird. Aufgrund der Gewinde- bzw. Schraubverbindung zwischen Verschlusskörper und Verbindungshülse kann somit gleichzeitig eine lösbare Verbindung mit dem Zahnteil geschaffen werden. Wird der Verschlusskörper aus der Verbindungshülse entfernt, kann auch die Verbindungshülse wieder aus der Innenführung des Zahnteils entnommen werden. Alternativ ist es auch zweckmäßig, die Verbindungshülse über eine Klebeverbindung fest mit der Innenführung des Zahnteils zu verbinden.

Zusätzlich oder optional zu der zuvor beschriebenen Gewindeverbindung, ist gemäß einer zweckmäßigen Ausführungsform auch eine Schnappverbindung zwischen dem Verschlusskörper und der Verbindungshülse denkbar. Der Verschlusskörper kann hierzu mindestens ein Federelement und die Verbindungshülse mindestens eine komplementäre Ausnehmung oder Nut aufweisen, um den Verschlusskörper innerhalb der das Zahnteil durchsetzenden Innenführung lösbar zu arretieren.

Es ist auch von Vorteil, wenn das Aufbauelement einen äußeren Gewindeabschnitt zum Eingriff in mindestens ein Innengewinde der Verbindungshülse aufweist, um das Zahnimplantat lösbar mit der Verbindungshülse zu verbinden.

Nach einer solchen, vorteilhaften Ausführungsform kann die Verbindungshülse beispielsweise auch mit zwei Innengewinden versehen sein. Ein erstes Innengewinde kann dann zur Verbindung mit dem Verschlusskörper genutzt werden, wohingegen ein zweites, unterhalb des ersten, angeordnetes Innengewinde zur Verbindung mit einem Außengewinde des Aufbauelements nutzbar ist. Sofern das Aufbauelement einen von dem Verschlusskörper abweichenden Durchmesser aufweist, kann das zweite Innengewinde radial versetzt, nämlich bei einem kleineren Durchmesser des Aufbauelements nach innen und bei einem größeren Durchmesser des Aufbauelements nach außen, zu dem ersten Innengewinde angeordnet sein. Durch die zusätzliche Gewindeverbindung zwischen der Verbindungshülse und dem Aufbauelement, lässt sich die axiale, in Richtung des Zahnimplantats wirkende Anpresskraft erhöhen. Gleichzeitig bildet die Verbindungshülse sowohl eine lösbare Verbindung mit dem Verschlusskörper, als auch mit dem Aufbauelement bzw. dem Zahnimplantat. Durch die radial nach außen, in Richtung des Zahnteils wirkende Anpresskraft kann zusätzlich ein Kraft- und/oder Reibschluss zwischen der Verbindungshülse und dem Zahnteil erwirkt werden.

Eine optionale Ausbildung der Erfindung sieht vor, dass ein Kragenabschnitt des Zahnteils zwischen der Verbindungshülse und dem Aufbauelement des Zahnimplantats angeordnet ist, um das Zahnteil und das Zahnimplantat mittels der Verbindungshülse lösbar miteinander zu verbinden.

Vorzugsweise weist also das Zahnteil an seinem unteren, dem Zahnimplantat zugeordneten Ende einen nach innen gerichteten Kragenabschnitt auf, anders ausgedrückt ist die Innenführung mit einem nach innen gerichteten Absatz ausgebildet. Der Kragenabschnitt des Zahnteils kann zwischen dem Zahnimplantat, insbesondere einem entsprechenden Flanschabschnitt des Aufbauelements und der Verbindungshülse angeordnet werden. D.h. zunächst wird das Zahnteil an den Flanschabschnitt des Aufbauelements angrenzend, auf das Aufbauelement aufgeschoben und anschließend die Verbindungshülse in die Innenführung des Zahnteils eingeschoben, wobei sich deren unteres Ende auf dem Kragenabschnitt des Zahnteils abstützt. Indem der Verschlusskörper in die Verbindungshülse eingedreht oder mittels der Schnappverbindung eingeschnappt wird, wird durch die Gewinne- und/oder Schnappverbindung eine axiale Anpresskraft in Richtung des Zahnimplantats ausgeübt und das Zahnteil derart mittelbar, durch die Verbindungshülse, und lösbar auf dem Zahnimplantat fixiert.

Besonders vorteilhaft ist es, wenn zwischen dem Verschlusskörper und der Verbindungshülse mindestens eine Dichtung angeordnet ist.

Eine Dichtung, beispielsweise in der Art eine Dichtungsscheibe, eines Dichtungskonus, eines O-Rings oder sonstiger zweckmäßiger Dichtungsausführungen, kann die Dichtigkeit zwischen dem Verschlusskörper und der Verbindungshülse weiter erhöhen. Optional ist es auch denkbar zusätzliche Dichtungen zwischen der Verbindungshülse und dem Aufbauelement und/oder dem Zahnteil anzuordnen. Alternativ ist es auch denkbar, eine insbesondere konusförmig ausgebildete Dichtungsfläche zwischen dem Verschlusskörper selbst und der Verbindungshülse auszubilden. Hierzu können der Verschlusskörper und die Verbindungshülse in ihrem oberen Bereich jeweils mit einer konusförmigen Außen- bzw. Innenfläche, die komplementär zueinander angeordnet sind, ausgebildet sein.

Nach einer vorteilhaften Variante umfasst der Verschlusskörper eine Innenausnehmung, insbesondere ein Innengewinde, zur Aufnahme eines Kernelements, insbesondere einer Madenschraube, und/oder eines Silikonkerns.

Indem der Verschlusskörper beispielsweise ein Innengewinde zur Aufnahme einer Madenschraube, vorzugsweise einer Imbusmadenschraube aufweist, ist es möglich, den Verschlusskörper mittels der Madenschraube aus der Verbindungshülse herauszuschrauben. Hierzu kann die Madenschraube, z. B. mit einem Imbusschlüssel in den Verschlusskörper, bzw. dessen Innengewinde eingeschraubt werden, bis deren unterer Abschnitt auf dem Verbindungselement, d. h. der Implantatschraube aufsetzt, sodass ein weiteres Einschrauben der Madenschraube zu einem Herausdrehen des Verschlusskörpers aus der Verbindungshülse führt. Auch eine zwischen Verschlusskörper und Verbindungshülse ausgebildete Dichtung in Form zweier konischer Dichtflächen, d.h. eine Konusverbindung, lässt sich auf diese Weise lösen.

Der Verschlusskörper kann aber auch eine Innenausnehmung für einen Silikonkern aufweisen. Der besondere Vorteil hierbei ist, dass der Verschlusskörper bspw. in seinem oberen Bereich, d. h. im oberen Bereich der Innenausnehmung, mit einer Werkzeugaufnahme zum Eingriff mit einem Schrauben- und/oder Imbusschlüssel aufweisen kann, um den Verschlusskörper selbst in die Verbindungshülse ein- bzw. auszuschrauben. Indem die Innenausnehmung mit einem Silikonkern befüllt wird, lässt sich die Werkzeugaufnahme versiegeln, sodass hier unter anderem ein Eindringen von Bakterien oder Keimen vermieden wird. Aufgrund der elastischen Eigenschaften des Silikonmaterials lässt sich der Silikonkern eindrücken bzw. einfedern um Zugriff zur Werkzeugaufnahme zu erlangen. Anschließend federt der Silikonkern in seine ursprüngliche Stellung zurück. Der Silikonkern kann außerdem mittels eines geeigneten zahnärztlichen Werkzeugs leicht entfernt werden.

Erfindungsgemäß ist, dass die Verbindungshülse eine ebene, insbesondere glatte Außenfläche und/oder die das Zahnteil durchsetzende Innenführung eine ebene, insbesondere glatte Oberfläche aufweist.

Auf diese Weise kann sichergestellt werden, dass die Verbindungshülse, insbesondere passgenau, gleitend in die das Zahnteil durchsetzende Innenführung eingeschoben und auch wieder aus dieser entfernt werden kann, ohne das Zahnteil bzw. die Oberfläche der Innenführung zu beschädigen. Eine Verbindung zwischen der Verbindungshülse und dem Zahnteil lässt sich dann, wie zuvor beschrieben mittels einer radialen Anpresskraft und den dadurch erwirkten Kraft- und/oder Reibschluss realisieren. Darüber hinaus ist auch die Herstellung eines Zahnteils mit einer Innenführung, welche eine glatte, ebene Oberfläche aufweist mit weniger Aufwand verbunden als beispielsweise ein Zahnteil mit Innengewinde.

Ferner sieht ein vorteilhaftes Ausführungsbeispiel vor, dass die Verbindungshülse ein Material umfasst, das eine geringere Härte aufweist als die Härte des Materials des Zahnteils. Vorzugsweise ist die Verbindungshülse aus Kunststoff gefertigt, könnte aber auch ein keramisches oder metallisches Material enthalten. Die Verwendung eines Materials mit einer geringen Härte, insbesondere Kunststoff, ermöglicht es, die Verbindungshülse kostengünstig und mit wenig Aufwand mit einem Innengewinde zu versehen. Auch sonstige Verbindungselemente lassen sich einfach, beispielsweise durch spanabhebende Bearbeitung oder im Spritzgussverfahren, realisieren. Durch die Verwendung eines zumindest teilweise elastischen Materials, kann außerdem eine verbesserte Dichtigkeit zwischen der Verbindungshülse und der das Zahnteil durchsetzenden Innenführung hergestellt werden. Indem das Material der Verbindungshülse eine geringere Härte aufweist als die des Materials des Zahnteils, insbesondere einer keramischen Krone, kann die Verbindungshülse zudem als Sollbruchteil ausgeführt werden, sodass im Zuge mechanischer Belastungen, welche beim Zusammensetzen und/oder Auseinandernehmen des Zahnersatzes auftreten, etwaige Beschädigungen ausschließlich die Verbindungshülse betreffen. In der simpelsten Ausführung kann es sich bei der Verbindunghülse somit um ein einfaches Plastikröhrchen mit Innengewinde handeln.

Schließlich sind nach einer beispielhaften Ausgestaltung der Erfindung das Zahnteil, die Hülse und/oder der Verschlusskörper mit einer jeweiligen, vorzugsweise derselben, einer natürlichen Zahnfarbe entsprechenden Farbgebung ausgestaltet sind.

Bei der Zahnfarbe kann es sich z.B: um Vita A1 - D4 handeln. Dies bietet den Vorteil, dass das Zahnteil, insbesondere die Krone, und der Verschlusskörper, welcher gemeinsam mit dem Zahnteil die Oberfläche des Zahnersatzes bildet, ein aufeinander abgestimmtes optisches Äußeres aufweisen sowie ähnliche, insbesondere identische, Materialeigenschaften. Darüber hinaus lässt sich auch der Gesamtmaterialbedarf reduzieren. Beispielsweise könnte das Zahnteil zusammen mit dem Verschlusskörper aus einem einzigen, voreingefärbten Keramikblock mit natürlichem Farbverlauf computergesteuert gefräst werden. Derartige Fräsverfahren können, bspw. mittels einer CAD/CAM-Maschine und/oder einem 3D-Plotter usw. durchgeführt werden.

Vorzugsweise wird als Material für das Zahnteil und den Verschlusskörper eine Keramik oder Glaskeramik (z.B. einer Lithium-Disilikat-Glaskeramik), insbesondere Zirkonoxid, für das Zahnimplantat eine Titanverbindung und für die Verbindungshülse ein Kunststoff verwendet. Es können aber auch jedwede andere, für den medizinischen Zahnbereich zertifizierte Materialien verwendet werden.

Zum Nachrüsten, d. h. zum nachträglichen Versiegeln eines Zahnersatzes, insbesondere eines zur Verankerung im Kieferknochen eines Patienten vorgesehenen Zahnersatzes, ist ein Bausatz im Umfang der erfindungsgemäßen Idee inbegriffen. Der Bausatz umfasst einen Verschlusskörper und eine Verbindungshülse, wobei die Verbindungshülse lösbar innerhalb einer den Zahnersatz durchsetzenden Innenführung anordenbar ist und der Verschlusskörper innerhalb der Verbindungshülse lösbar arretierbar ist.

Mit dem erfindungsgemäßen Bausatz ließen sich beispielsweise bereits gefräste Keramikkronen, die zur Verwendung mit einem Implantat vorgesehen sind, Nachrüsten und Versiegeln.

Besonders vorteilhaft ist es, wenn der Bausatz zusätzlich ein Zahnteil enthält, welches Zahnteil von einer Innenführung durchsetzt ist, wobei eine Außenfläche der Verbindungshülse mit der Oberfläche der Innenführung zumindest teilweise verklebt ist und/oder in die Innenführung eingepresst ist.

In einer Ausführungsform, in der der Bausatz zusätzlich noch das Zahnteil umfasst, ist es besonders zweckmäßig, wenn die Verbindungshülse bereits fest mit dem Zahnteil verbunden ist, d.h. in dieses eingeklebt ist. Besonders vorteilhaft ist es, die Verbindunghülse mittels einer Lötverbindung, insbesondere eines Glaslots mit dem Zahnteil zu verbinden. In der Anwendung könnte dann das fertige Zahnteil mit der eingeklebten und/oder eingepressten und/oder eingelöteten Verbindungshülse auf das Zahnimplantat, insbesondere auf dessen Aufbauelement aufgesetzt werden und anschließend der Verschlusskörper in die Verbindungshülse eingeschnappt und/oder eingedreht werden, um den Zahnersatz zu Versiegeln. Der das Zahnteil überragende, obere Abschnitt des Verschlusskörpers kann anschließend vom Zahnarzt vor Ort abgeschliffen und mit der Kaufläche des Zahnteils auf ein Niveau gebracht werden. Zudem bietet diese Ausführungsform den Vorteil, dass wiederum, wie bereits zuvor beschrieben, das Zahnteil und der Verschlusskörper aus einem gemeinsamen Keramikblock heraus fräsbar sind.

Schließlich kann nach einer optionalen Variante des erfindungsgemäßen Bausatzes zusätzlich ein Aufbauelement enthalten sein, welches Aufbauelement über ein Verbindungselement mit einem Implantatkörper verbindbar ist und einen äußeren Gewindeabschnitt zur Ausbildung einer lösbaren Verbindung mit mindestens einem Innengewinde der Verbindungshülse aufweist.

In dieser Ausführungsform ist es denkbar, dass der Implantatkörper des Implantats bereits in den Kieferknochen des Patienten eingesetzt wurde und der Einheilprozess abgeschlossen ist. Beim Einsetzen des Zahnteils werden zunächst das im Bausatz enthaltene Aufbauelement und anschließend das vorzugsweise komplementär zum Aufbauelement geformte Zahnteil aufgesetzt. Durch Einfügen des Verbindungselements, vorzugsweise einer Schraube wird das Aufbauelement lösbar mit dem Verschlusskörper verbunden. Die Verbindungshülse kann entweder nachfolgend in das Zahnteil eingeschoben werden oder ist bereits mit diesem verklebt bzw. in dieses eingepresst. Abschließend wird der Zahnersatz mit dem Verschlusskörper versiegelt, indem der Verschlusskörper in die Verbindungshülse eingedreht und/oder eingeschnappt wird.

Weitere Einzelheiten, Merkmale, Merkmals(unter) kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
Fig. 1 eine schematische Schnittdarstellung eines ersten Ausführungsbeispiels des erfindungsgemäßen Zahnersatzes mit einer Gewindeverbindung,
Fig. 2 eine schematische Schnittdarstellung eines zweiten Ausführungsbeispiels des erfindungsgemäßen Zahnersatzes mit einer Schnappverbindung,
Fig. 3 eine schematische Schnittdarstellung eines dritten Ausführungsbeispiels des erfindungsgemäßen Zahnersatzes mit einer doppelten Gewindeverbindung,
Fig. 4 eine schematische Schnittdarstellung eines vierten Ausführungsbeispiels des erfindungsgemäßen Zahnersatzes, wobei die Verbindungshülse und das Aufbauelement einteilig ausgebildet sind,
Fig. 5 eine schematische Schnittdarstellung eines fünften Ausführungsbeispiels des erfindungsgemäßen Zahnersatzes mit einer Innenausnehmung des Verschlusskörpers und einer Madenschraube,
Fig. 6 eine schematische Schnittdarstellung eines sechsten Ausführungsbeispiels des erfindungsgemäßen Zahnersatzes mit einer Innenausnehmung des Verschlusskörpers und einem Silikonkern,
Fig. 7 eine schematische Schnittdarstellung eines siebten Ausführungsbeispiels des erfindungsgemäßen Zahnersatzes mit einem einteiligen Zahnimplantat,
Fig. 8 eine schematische Schnittdarstellung eines achten Ausführungsbeispiels des erfindungsgemäßen Zahnersatzes mit einer Innenausnehmung des Verschlusskörpers und einer Madenschraube sowie einem einteiligen Zahnimplantat.

Die Figuren sind lediglich beispielhafter Natur und dienen nur dem Verständnis der Erfindung. Die gleichen Elemente sind in der Regel mit denselben Bezugszeichen versehen.

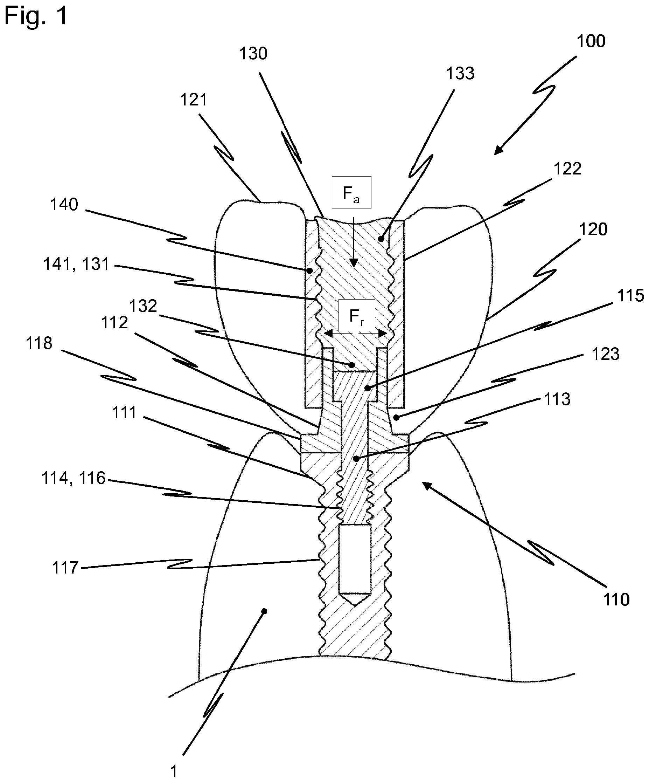

Der Figur 1 ist ein erstes Ausführungsbeispiel eines erfindungsgemäßen Zahnersatzes 100 anhand einer schematischen Schnittdarstellung zu entnehmen. Der Zahnersatz 100 umfasst ein Zahnimplantat 110 und ein Zahnteil 120. Das Zahnimplantat 110 weist wiederum einen Implantatkörper 111 und ein Aufbauelement 112 auf, die hier zweiteilig ausgeführt dargestellt sind. Sowohl das Aufbauelement 112 als auch der Implantatkörper 111 umfassen jeweils einen Verbindungsabschnitt 113, wobei der Verbindungsabschnitt 113 des Implantatkörpers 111 mit einem Innengewinde 114 versehen ist. In das Innengewinde 114 des Zahnimplantats 110 greift ein Verbindungselement 115, insbesondere eine Verbindungsschraube bzw. Implantatschraube, mit einem entsprechenden Außengewinde 116 ein. Auch der Implantatkörper 111 umfasst ein Außengewinde 117, welches in den Kieferknochen 1 eines Patienten eingedreht und fest mit diesem verbunden ist. Vorzugsweise ist das Zahnimplantat 110 aus einem metallischen Werkstoff, insbesondere eine Titanverbindung enthaltend, und/oder aus Zirkonoxid hergestellt.

Das Aufbauelement 112 weist in diesem Ausführungsbeispiel einen Flanschabschnitt 118 auf, auf den sich das Zahnteil 120, hier beispielhaft eine Krone, mit einem unteren, dem Zahnimplantat 110 zugeordneten Ende abstützt. Das obere Ende des Zahnteils 120 ist als Kaufläche 121 ausgebildet. Eine im Wesentlichen zylindrisch ausgebildete Innenführung 122 durchsetzt das Zahnteil 120 in axialer Richtung entlang dessen Längsachse und weist im Bereich des unteren Endes des Zahnteils 120 einen radial nach innen weisenden Kragenabschnitt 123 auf, welcher ebenfalls in radialer Richtung bündig mit dem Aufbauelement 112 abschließt bzw. an dieses angrenzt. Vorzugsweise ist der Sitz des Zahnteils 120 auf dem Aufbauelement 112 konusförmig ausgebildet. Innerhalb der Innenführung 122 ist eine Verbindungshülse 140 angeordnet und optional fest mit der Oberfläche der Innenführung 122 verklebt. Die radial äußere Außenfläche der Verbindungshülse 140 ist, wie auch die nach innen weisende Oberfläche der Innenführung 122 eben, insbesondere glatt mit einer sehr geringen Oberflächenrauhigkeit ausgebildet. Im Inneren weist die Verbindungshülse 140 ein erstes Innengewinde 141 auf. Die Verbindungshülse 140 ist vorzugsweise aus einem Kunststoffmaterial ausgebildet, welches eine geringere Härte als das Material des Zahnteils 120 aufweist. In einer anderen Variante, bspw. für den Fall, dass das Zahnteil 120 aus einer Glaskeramik besteht (z.B. einer Lithium-Disilikat-Glaskeramik) kann die Verbindungshülse 140 zur Stabilisierung des Zahnteils 120 mit einer höheren Härte und/oder Festigkeit als das Material des Zahnteils 120 ausgebildet sein, z.B. stabilisiertes Zirkonoxid. In dieser Variante ist es vorstellbar, das Zahnteil 120 auf die Verbindungshülse 140 aufzupressen.

Ein innerhalb der Verbindungshülse 140 angeordneter Verschlusskörper 130 weist komplementär ein Außengewinde 131 auf, welches in das erste Innengewinde 141 der Verbindungshülse 140 eingreift. Der obere Abschnitt 133 des Verschlusskörpers 130 ist als Okklusions- bzw. Kauflache bündig mit dem oberen Ende des Zahnteils 120 ausgebildet. Der untere Abschnitt 132 des Verschlusskörpers 130 mündet in den Verbindungsabschnitt 113 des Zahnimplantats 110 und schließt insbesondere bündig mit dem Verbindungselement 115 ab. Sofern das Verbindungselement 115 als Verbindungsschraube ausgeführt ist, ist es denkbar, den unteren Abschnitt 132 des Verschlusskörpers 130 ist mit einem Federelement bzw. einem Vorsprung auszubilden, welcher formschlüssig in die Schraubennut eingreift, wodurch der Verschlusskörper 130 gleichzeitig als Verdrehsicherung für das Verbindungselement 115 fungiert. Der obere Abschnitt 133 des Verschlusskörpers 130 ragt aus der Verbindungshülse 140 heraus und kann bspw. im Mundraum des Patienten abgefeilt und auf ein Niveau mit der Kaufläche 121 des Zahnteils 120 gebracht werden. Indem der Verschlusskörper 130 in die Verbindungshülse 140 mittels der Gewindeverbindung 131, 141 eingedreht wird, wird einerseits eine nach unten, in Richtung des Zahnimplantats 110 gerichtete axiale Anpresskraft Fₐ ausgeübt, welche das Zahnteil 120, genauer dessen Kragenabschnitt 123 zwischen der Verbindungshülse 140 und dem Aufbauelement 112, genauer dem Flanschabschnitt 118 einspannt. Andererseits wird eine nach außen, in Richtung des Zahnteils 120 gerichtete radiale Anpresskraft Fᵣ ausgeübt, wodurch die Verbindungshülse 140 kraft- und/oder reibschlüssig, lösbar mit dem Zahnteil 120 verbunden wird. Vorzugsweise kann hierdurch auf jegliche Klebeverbindungen verzichtet werden.

Besonders vorteilhaft ist es, wenn der Verschlusskörper 130 und das Zahnteil 120 aus demselben, keramischen Material bestehen und/oder aus einem gemeinsamen Keramikblock herausgefräst sind.

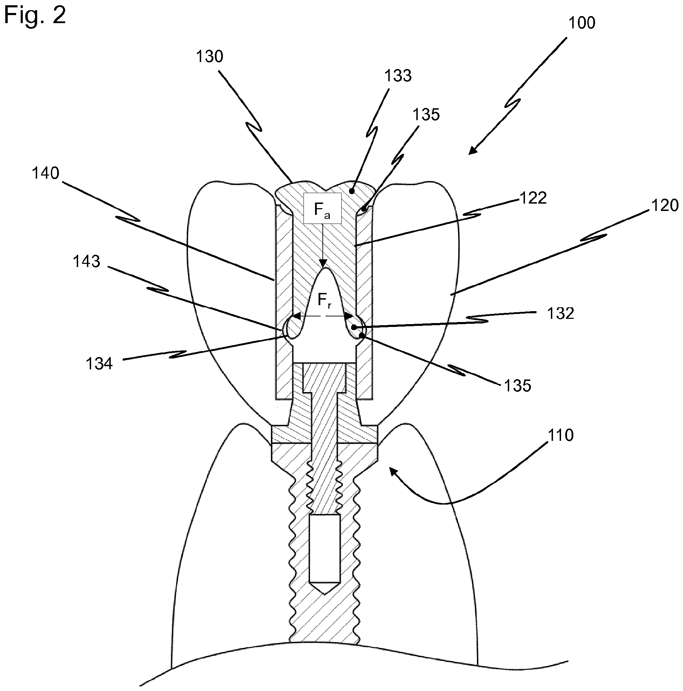

Ein zweites Ausführungsbeispiel eines erfindungsgemäßen Zahnersatzes 100 ist in der Figur 2 als schematische Schnittdarstellung gezeigt. Der hier dargestellte Zahnersatz 100 gleicht grundsätzlich dem zuvor beschriebenen ersten Ausführungsbeispiel, weshalb nachfolgend lediglich die Unterschiede näher erläutert werden. Das zweite Ausführungsbeispiel des erfindungsgemäßen Zahnersatzes 100 unterscheidet sich von dem zuvor beschriebenen, ersten Ausführungsbeispiel im Wesentlichen durch die Ausgestaltung der lösbaren Verbindung zwischen dem Verschlusskörper 130 und der Verbindungshülse 140, die hier als Schnappverbindung umgesetzt ist. Die Verbindungshülse 140 ist innenseitig mit einer umlaufenden Nut 143 versehen, die zum Eingriff mit komplementär angeordneten Federelementen 134 des Verschlusskörpers 130 ausgebildet ist. Wird der Verschlusskörper 130 in die innerhalb der Innenführung 122 des Zahnteils 120 angeordnete Verbindungshülse 140 eingeführt, federn die Federelemente 134 radial nach innen und schnappen bei Erreichen der Nut 143 in diese eine. Aufgrund der Schnappverbindung wird einerseits eine radiale Anpresskraft Fᵣ nach außen, in Richtung des Zahnteils 120 ausgeübt. Aufgrund der radialen Anpresskraft Fᵣ wird wiederum ein Kraft- und/oder Reibschluss zwischen der Verbindungshülse 140 und dem Zahnteil 120 erwirkt. Andererseits wirkt eine axiale Anpresskraft Fₐ nach unten, in Richtung des Zahnimplantats 110. Zwischen dem Verschlusskörper 130 und der Verbindungshülse 140 sind im Bereich des unteren Abschnitts 132 und/oder des oberen Abschnitts 133 des Verschlusskörpers 130 jeweils Dichtungsschlitze 135 ausgebildet. Innerhalb der Dichtungsschlitze 135, insbesondere innerhalb der Nut 143 der Verbindungshülse, können Dichtungen (hier nicht dargestellt), z.B. in Form von einer Dichtungsscheibe, eines Dichtungskonus, eines O-Rings oder einer sonstigen zweckmäßigen Dichtungsausführung, angeordnet werden, um die Dichtigkeit zwischen dem Verschlusskörper 130 und der Verbindungshülse 140 zu erhöhen. Die Dichtungen werden u.a. aufgrund der radialen Anpresskraft Fₐ innerhalb der jeweiligen Dichtungsschlitze 135 gehalten.

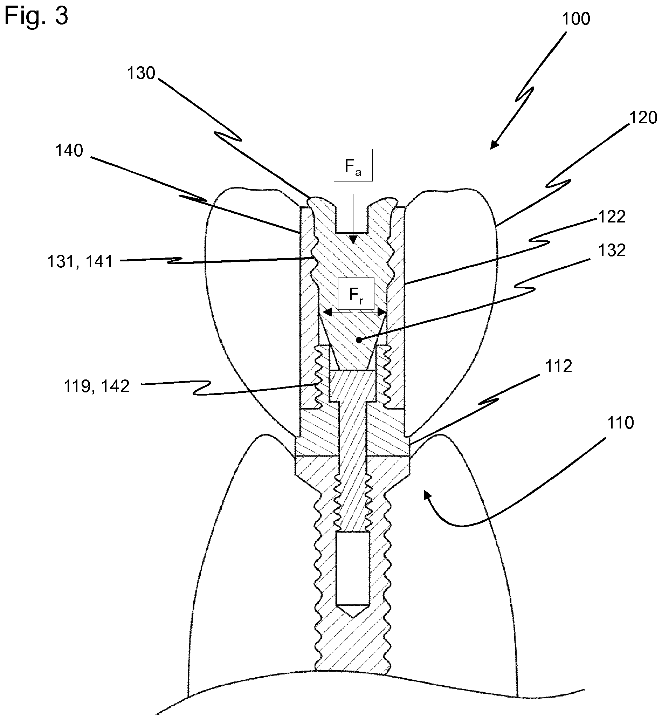

Auch das dritte Ausführungsbeispiel, welches in der Figur 3 schematisch als Schnitt dargestellt ist, ähnelt grundsätzlich dem ersten Ausführungsbeispiel des erfindungsgemäßen Zahnersatzes 100 nach Figur 1. Die Verbindungshülse 140 ist hier mit einem Doppelgewinde ausgeführt, d.h. die Verbindungshülse 140 umfasst ein erstes Innengewinde 141 und ein zweites Innengewinde 142. Das erste Innengewinde 141 ist, wie auch im ersten Ausführungsbeispiel gemäß Figur 1, zum Eingriff mit einem Außengewinde 131 des Verschlusskörpers 130 vorgesehen. Das zweite Innengewinde 142 hingegen ist zum Eingriff mit einem Außengewinde 119 des Aufbauelements 112 des Zahnimplantats 110 vorgesehen. Auf diese Weise lässt sich der Verschlusskörper 130 über die Verbindungshülse 140 mittelbar mit dem Aufbauelement 112 und somit mit dem Zahnimplantat 110 lösbar verbinden, insbesondere verschrauben. In dieser Ausführungsform weist der Verschlusskörper 130 an seinem unteren Abschnitt 132 eine konusartige Form bzw. einen Kegelstumpf auf. Die Verbindung mit dem Zahnteil 120, dessen Innenführung 122 hier einen stetigen Verlauf, ohne den Kragenabschnitt 123 (siehe Figur 1), aufweist, wird wiederum über die Verbindungshülse 140 ausgeführt. Die Außenfläche der Verbindungshülse 140 kann hierzu entweder mit der inneren Oberfläche der Innenführung 122 des Zahnteils 120 verklebt und/oder verpresst werden, grundsätzlich ist jedoch auch eine kraft- und/oder reibschlüssige Verbindung aufgrund der in Richtung des Zahnteils 120 wirkenden radialen Anpresskraft Fᵣ möglich.

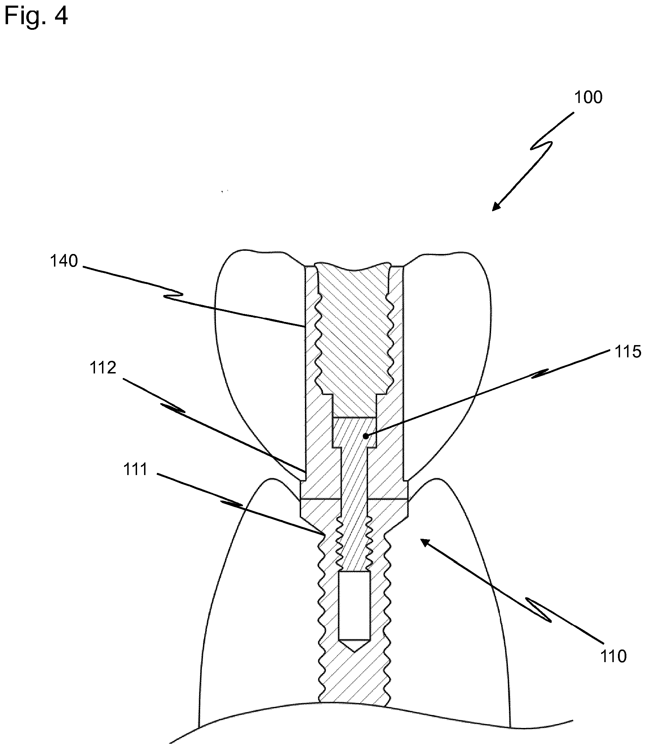

Das vierte Ausführungsbeispiel eines erfindungsgemäßen Zahnersatzes 100 gemäß Figur 4 entspricht im Wesentlichen dem in der Figur 1 dargestellten ersten Ausführungsbeispiel. Abweichend davon sind die Verbindungshülse 140 und das Aufbauelement 112 des Zahnimplantats 110 in dieser Ausführungsform einteilig bzw. einstückig ausgeführt. Das Verbindungselement 115, insbesondere eine Implantatschraube verbindet somit die Verbindungshülse 140 direkt mit dem Implantatkörper 111. Auf diese Weise lässt sich die Anzahl der erforderlichen einzelnen Bauteile des Zahnersatzes 100 sowie der Verbindungen zwischen den Bauteilen insgesamt reduzieren.

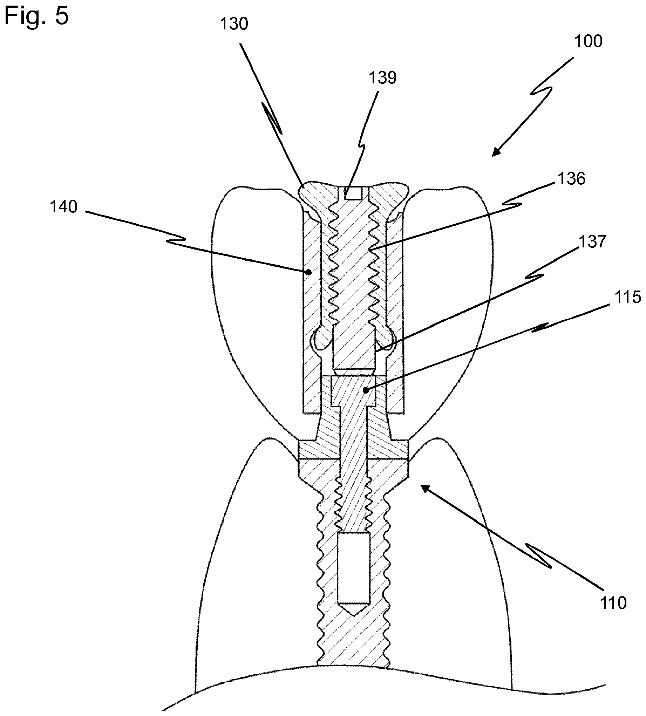

In der Figur 5 ist ein fünftes Ausführungsbeispiel eines erfindungsgemäßen Zahnersatzes 100 dargestellt, welches im Wesentlichen dem in der Figur 2 gezeigten zweiten Ausführungsbeispiel entspricht. Der hier gezeigte Verschlusskörper 130 weist jedoch zusätzlich eine Innenausnehmung 136 auf, in welcher ein Kernelement, im konkreten Ausführungsbeispiel eine Madenschraube 137, angeordnet ist. Das Kernelement bzw. die Madenschraube 137 ist mit einem Innengewinde innerhalb der Innenausnehmung 136 das Verschlusskörpers 130 verschraubt. Das untere Ende des Kernelements bzw. der Madenschraube 137 weist in Richtung des Verbindungselements 115 bzw. der Implantatschraube. Wird das Kernelement bzw. die Madenschraube 137 weiter in den Verschlusskörper 130, d.h. in Richtung des Zahnimplantats 110 eingeschraubt, so stützt sich deren unteres Ende am Verbindungselement 115 bzw. der Implantatschraube ab, wodurch der Verschlusskörper 130 nach oben, aus der Verbindungshülse 140 hinaus "geschraubt" wird. An seinem oberen Ende weist das Kernelement bzw. die Madenschraube 137 eine Werkzeugaufnahme 139 auf, in welche ein Zahnarzt beispielsweise mit einem Imbusschlüssel eingreifen könnte, um den Verschlusskörper 130 aus der Verbindungshülse 140 zu entfernen und so Zugriff zu dem darunterliegenden Zahnimplantat 110 zu erlangen. Alternativ und hier nicht dargestellt können die Verbindungshülse 140 und der Verschlusskörper 130 jeweils konusförmig ausgebildet sein, um eine gemeinsame Dichtfläche zu erzeugen. Mittels des Kernelements bzw. der Madenschraube 137 ließe sich dann der konusförmige Verschlusskörper 130 aus der Verbindungshülse 140 ausschrauben.

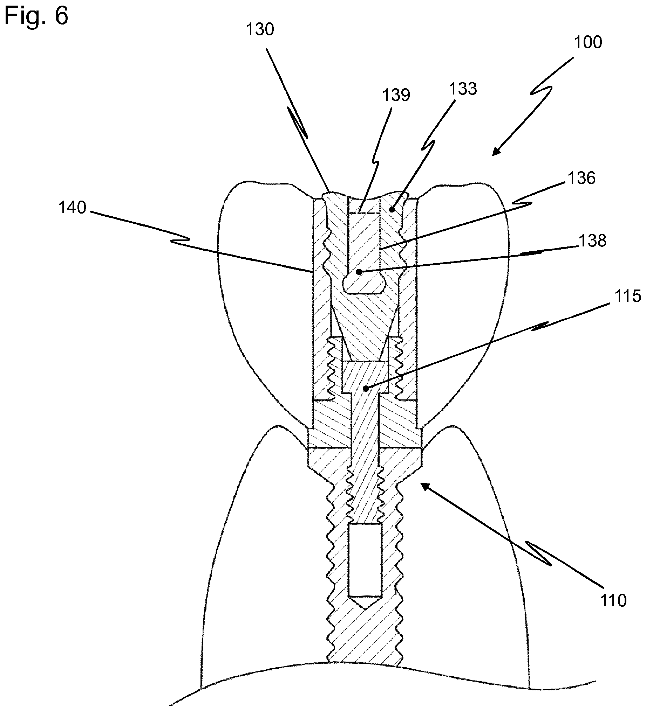

Das in der Figur 6 gezeigte sechste Ausführungsbeispiel eines erfindungsgemäßen Zahnersatzes 100 unterscheidet sich von dem dritten Ausführungsbeispiel gemäß Figur 3 ebenfalls dadurch, dass der Verschlusskörper 130 eine Innenausnehmung 136 aufweist, welche hier zur Aufnahme eines Kernelements, im Speziellen eines Silikonkerns 138 vorgesehen ist. Der Verschlusskörper 130 ist in die Verbindungshülse 140 eingeschraubt und weist in seinem oberen Abschnitt 133 eine, hier gestrichelt angedeutete, Werkzeugaufnahme 139 auf, um den Verschlusskörper 130 durch Eingriff mit einem entsprechenden Werkzeug, insbesondere einem Imbusschlüssel aus der Verbindungshülse 140 ausschrauben zu können. Das Kernelement bzw. der Silikonkern 138 dient zum Schutz und/oder zum Versiegeln der Werkzeugaufnahme 139. Um Zugriff zu dieser zu erlangen lässt sich das Kernelement bzw. der Silikonkern 138 stauchen und federt anschließend in seine ursprüngliche Position zurück. Alternativ lässt sich das Kernelement bzw. der Silikonkern 138 auch mit einem geeigneten Werkzeug vollständig aus der Innenausnehmung 136 entfernen.

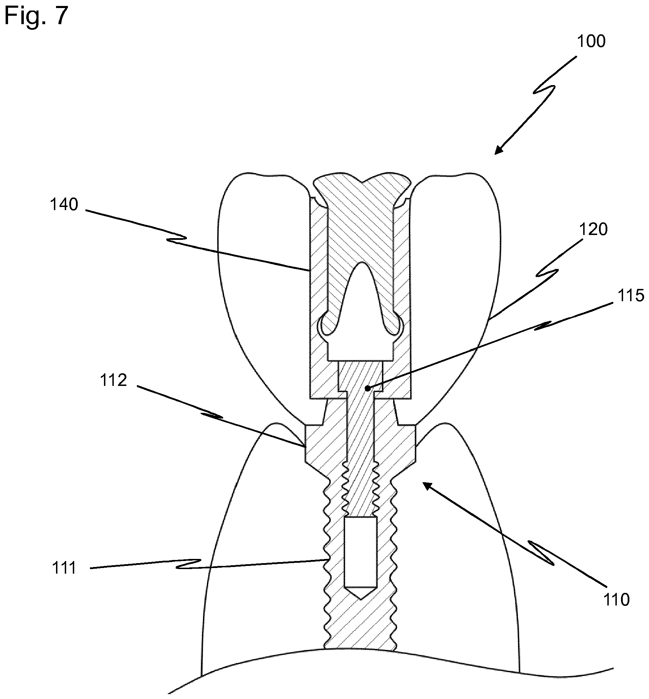

Das siebte Ausführungsbeispiel eines erfindungsgemäßen Zahnersatzes 100 gemäß der Figur 7 entspricht im Wesentlichen dem in der Figur 2 dargestellten zweiten Ausführungsbeispiel. Hiervon abweichend sind der Implantatkörper 111 und das Aufbauelement 112 als einstückiges und/oder einteiliges Zahnimplantat 110 ausgeführt. Zusätzlich weist die Verbindungshülse 140 in ihrem unteren, in Richtung des Zahnimplantats 110 weisenden Bereich, einen nach innen gerichteten Kragenabschnitt auf, sodass die Verbindungshülse 140 über diesen Kragenabschnitt mittels des Verbindungselements 115, insbesondere einer Implantatschraube, mit dem Zahnimplantat 110 verbindbar ist. Diese Ausführungsform ermöglicht eine spezielle Behandlungsmethode, bei welcher beispielsweise zunächst ein Provisorium, das heißt ein vorläufiges Zahnteil, mittels des Verbindungselements 115 und der Verbindungshülse 140 mit dem Zahnimplantat 110 verbunden wird. Nachdem das endgültige Zahnteil 120, zum Beispiel eine Krone, fertiggestellt ist lässt sich das Provisorium mittels der Schraubverbindung einfach entfernen und durch die Krone ersetzen. Das endgültige Zahnteil 120 bzw. die Krone kann wahlweise und/oder bedarfsweise ebenfalls verschraubt oder am Aufbauelement 111 zementiert werden.

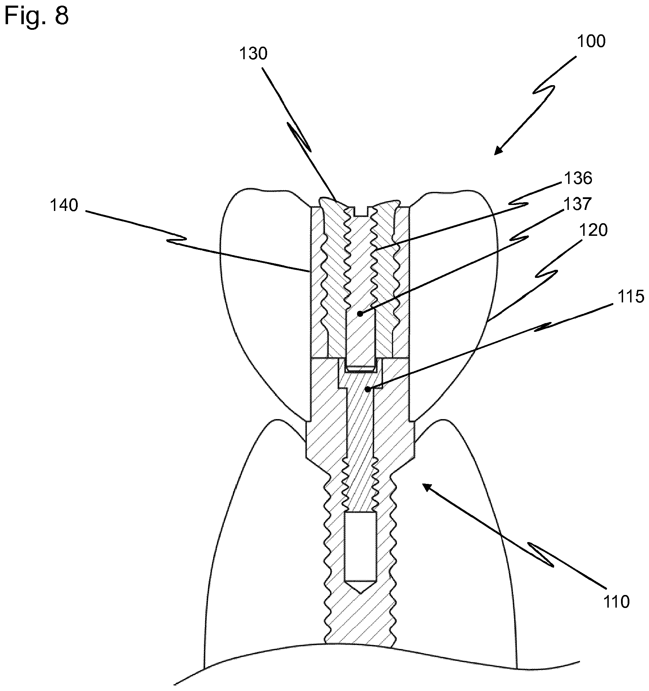

Schließlich ist in der Figur 8 ein achtes Ausführungsbeispiel eines erfindungsgemäßen Zahnersatzes 100 dargestellt, welches im Wesentlichen dem in der Figur 1 gezeigten ersten Ausführungsbeispiel entspricht. Der hier gezeigte Verschlusskörper 130 ist wiederum mit einer Innenausnehmung 136 und einem darin angeordneten und als Madenschraube ausgeführten Kernelement 137 versehen. Das untere, dem Zahnimplantat 110 zugewandte Ende des Kernelements bzw. der Madenschraube 137 ragt verdrehsichernd, insbesondere formschlüssig, in das obere Ende des Verbindungselements 115, d.h. in den Schraubenkopf der Implantatschraube, hinein. Auch in dieser Ausführungsform ist das Zahnimplantat 110 einstückig und/oder einteilig ausgeführt. Die Verbindungshülse 140 und der Verschlusskörper 130 sind miteinander verschraubt, wobei ein innerer Durchmesser des Verschlusskörpers 130 auf dem Schraubenkopf der Implantatschraube, d.h. des Verbindungselements 115, aufliegt. Um den Verschlusskörper 130 und/oder die Verbindungshülse 140 aus dem Zahnteil 120 zu lösen, kann daher zunächst das Kernelement bzw. die Madenschraube 137 entfernt werden. Anschließend wird das Verbindungselement 115 aus dem Zahnimplantat 110 herausgedreht und schiebt mit seinem oberen Ende bzw. dem Schraubenkopf den Verschlusskörper 130, gegebenenfalls gemeinsam mit der Verbindungshülse 140, aus dem Inneren des Zahnteils 120 heraus. Sofern das Zahnteil 120 mit der Verbindungshülse 140 verklebt ist, lässt sich dieses gleichzeitig mit entfernen.

Die in den jeweiligen Ausführungsformen beschriebenen Merkmale können in technisch sinnvoller Weise beliebig miteinander kombiniert werden.

Insgesamt bietet der erfindungsgemäße Zahnersatz 100 insbesondere den Vorteil, dass jegliche Verbindungen, zwischen Zahnimplantat 110, Zahnteil 120 und/oder Verschlusskörper 130 mittelbar oder unmittelbar über die Verbindungshülse 140, insbesondere lösbar, ausgeführt sind. Die Verbindungen können als Gewindeverbindungen 131, 141; 119, 142, Schnappverbindung 134, 143 oder mittels entsprechender Anpresskräfte Fₐ, F, realisiert sein. Vorzugsweise wird auf Klebeverbindungen vollständig verzichtet.

Erfindungsgemäß ist zum Nachrüsten auch ein Bausatz vorgesehen, welcher zumindest den Verschlusskörper 130 und die Verbindungshülse 140, jeweils nach einem der beschriebenen Ausführungsbeispiele umfasst. Darüber hinaus kann im Bausatz auch zusätzlich das Zahnteil 120 und/oder das Aufbauelement 112, gegebenenfalls mit dem Verbindungselement 115 enthalten sein.

### Bezugszeichenliste

- 1: Kieferknochen
- 100: Zahnersatz
- 110: Zahnimplantat
- 111: Implantatkörper
- 112: Aufbauelement (Abutment)
- 113: Verbindungsabschnitt
- 114: Innengewinde des Zahnimplantats
- 115: Verbindungselement (Implantatschraube)
- 116: Außengewinde des Verbindungselements
- 117: Außengewinde des Implantatkörpers
- 118: Flanschabschnitt
- 119: Außengewinde des Aufbauelements
- 120: Zahnteil
- 121: Kaufläche
- 122: Innenführung
- 123: Kragenabschnitt
- 130: Verschlusskörper
- 131: Außengewinde des Verschlusskörpers
- 132: unterer Abschnitt des Verschlusskörpers
- 133: oberer Abschnitt des Verschlusskörpers
- 134: Federelement
- 135: Dichtungsschlitz
- 136: Innenausnehmung des Verschlusskörpers
- 137: Kernelement (Madenschraube)
- 138: Kernelement (Silikonkern)
- 139: Werkzeugaufnahme
- 140: Verbindungshülse
- 141: erstes Innengewinde der Verbindungshülse
- 142: zweites Innengewinde der Verbindungshülse
- 143: Nut
- Fₐ: axiale Anpresskraft
- Fᵣ: radiale Anpresskraft

## Patentansprüche

1. Zahnersatz (100) zur Verankerung im Kieferknochen (1), umfassend
- ein Zahnimplantat (110) mit einem Implantatkörper (111) und einem Aufbauelement (112),
- ein Zahnteil (120) mit einer das Zahnteil (120) durchsetzenden Innenführung (122) und
- einen Verschlusskörper (130), welcher zum Versiegeln des Zahnersatzes (100) innerhalb der das Zahnteil (120) durchsetzenden Innenführung (122) anordenbar ist,
**dadurch gekennzeichnet, dass**
zwischen dem Verschlusskörper (130) und der Innenführung (122) des Zahnteils (120) eine Verbindungshülse (140) angeordnet ist, wobei die Verbindungshülse (140) eine ebene Außenfläche und die Innenführung (122) eine ebene Oberfläche aufweist, sodass die Verbindungshülse (122) gleitend in die Innenführung (122) eingeschoben werden kann und mittels welcher Verbindungshülse (140)
- das Zahnteil (120) und das Zahnimplantat (110) mittelbar, lösbar, miteinander verbindbar sind und
- der Verschlusskörper (130) innerhalb der das Zahnteil (120) durchsetzenden Innenführung (122) lösbar arretierbar ist.

2. Zahnersatz (100) nach Anspruch 1, **dadurch gekennzeichnet, dass** das Zahnimplantat (110) zweiteilig ausgeführt ist und einen den Implantatkörper (111) und das Aufbauelement (112) durchsetzenden Verbindungsabschnitt (113) sowie ein innerhalb des Verbindungsabschnitts (113) anordenbares Verbindungselement (115) aufweist, wobei der Verschlusskörper (130), innerhalb der das Zahnteil (120) durchsetzenden Innenführung (122) und in den das Aufbauelement (112) durchsetzenden Verbindungsabschnitt (113) mündend, anordenbar ist.

3. Zahnersatz (100) nach Anspruch 1 oder 2, **dadurch gekennzeichnet, dass** der Verschlusskörper (130) ein Außengewinde (131) und die Verbindungshülse (140) mindestens ein Innengewinde (141, 142) aufweist, um den Verschlusskörper (130) innerhalb der das Zahnteil (120) durchsetzenden Innenführung (122) lösbar zu arretieren.

4. Zahnersatz (100) nach einem der vorhergehenden Ansprüche, **dadurch gekennzeichnet, dass** der Verschlusskörper (130) mindestens ein Federelement (134) und die Verbindungshülse (140) mindestens eine komplementäre Ausnehmung oder Nut (143) aufweist, um den Verschlusskörper (130) innerhalb der das Zahnteil (120) durchsetzenden Innenführung (122) lösbar zu arretieren.

5. Zahnersatz (100) nach einem der vorhergehenden Ansprüche, **dadurch gekennzeichnet, dass** das Aufbauelement (112) ein Außengewinde (119) zum Eingriff in mindestens ein Innengewinde (141, 142) der Verbindungshülse (140) aufweist, um das Zahnimplantat (110) lösbar mit der Verbindungshülse (140) zu verbinden.

6. Zahnersatz (100) nach einem der vorhergehenden Ansprüche, **dadurch gekennzeichnet, dass** ein Kragenabschnitt (123) des Zahnteils (120) zwischen der Verbindungshülse (140) und dem Aufbauelement (112) des Zahnimplantats (110) angeordnet ist, um das Zahnteil (120) und das Zahnimplantat (110) mittels der Verbindungshülse (140) lösbar miteinander zu verbinden.

7. Zahnersatz (100) nach einem der vorhergehenden Ansprüche, **dadurch gekennzeichnet, dass** zwischen dem Verschlusskörper (130) und der Verbindungshülse (140) mindestens eine Dichtung angeordnet ist.

8. Zahnersatz (100) nach einem der vorhergehenden Ansprüche, **dadurch gekennzeichnet, dass** der Verschlusskörper (130) eine Innenausnehmung (136), insbesondere ein Innengewinde, zur Aufnahme eines Kernelements (137, 138) aufweist.

9. Zahnersatz (100) nach einem der vorhergehenden Ansprüche, **dadurch gekennzeichnet, dass** die Verbindungshülse (140) eine glatte Außenfläche und/oder die das Zahnteil (120) durchsetzende Innenführung (122) eine glatte Oberfläche aufweist.

10. Zahnersatz (100) nach einem der vorhergehenden Ansprüche, **dadurch gekennzeichnet, dass** die Verbindungshülse (140) ein Material umfasst, das eine geringere Härte aufweist als die Härte des Materials des Zahnteils (120).

11. Zahnersatz (100) nach einem der vorhergehenden Ansprüche, **dadurch gekennzeichnet, dass** das Zahnteil (120), die Hülse und/oder der Verschlusskörper mit einer jeweiligen, insbesondere derselben, einer natürlichen Zahnfarbe entsprechenden Farbgebung ausgestaltet sind.

12. Bausatz zum Versiegeln eines Zahnersatzes (100), insbesondere eines Zahnersatzes (100) zur Verankerung im Kieferknochen (1), mit einem Verschlusskörper (130) und einer Verbindungshülse (140), wobei die Verbindungshülse (140) eine ebene Außenfläche aufweist und lösbar innerhalb eine den Zahnersatz (100) durchsetzende Innenführung (122) mit einer ebenen Oberfläche gleitend eingeschoben werden kann und wobei der Verschlusskörper (130) innerhalb der Verbindungshülse (140) lösbar arretierbar ist.

13. Bausatz nach Anspruch 12, **dadurch gekennzeichnet, dass** zusätzlich ein Zahnteil (120) enthalten ist, welches Zahnteil (120) von einer Innenführung (122) durchsetzt ist, wobei eine Außenfläche der Verbindungshülse (140) mit der Oberfläche der Innenführung (122) zumindest teilweise verklebt und/oder in die Innenführung (122) eingepresst ist.

14. Bausatz nach Anspruch 12 oder 13, **dadurch gekennzeichnet, dass** zusätzlich ein Aufbauelement (112) enthalten ist, welches Aufbauelement (112) über ein Verbindungselement (115) mit einem Implantatkörper (111) verbindbar ist und ein Außengewinde (119) zur Ausbildung einer lösbaren Verbindung mit mindestens einem Innengewinde (141, 142) der Verbindungshülse (140) aufweist.

15. Bausatz nach Anspruch 14, **dadurch gekennzeichnet, dass** die Verbindungshülse (140) und/oder der Verschlusskörper (130) mittels des Verbindungselements (115) aus der den Zahnersatz (100) durchsetzenden Innenführung (122) lösbar ist.

## Claims

1. A dental prosthesis (100) for anchoring in the jawbone (1), comprising a dental implant (110) with an implant body (111) and an abutment (112),
- a tooth part (120) with an internal guide (122) penetrating the tooth part (120), and
- a closure body (130) which, to seal the dental prosthesis (100), can be arranged within the internal guide (122) penetrating the tooth part (120),
**characterised In that**
a connecting sleeve (140) is arranged between the closure body (130) and the Internal guide (122) of the tooth part (120), wherein the connecting sleeve (140) has a flat outer surface and the internal guide (122) has a flat surface, with the result that the connecting sleeve (122) can be inserted into the internal guide (122) in sliding manner, and by means of which connecting sleeve (140)
- the tooth part (120) and the dental implant (110) can be connected to one another, indirectly, releasably and
- the closure body (130) can be releasably locked within the internal guide (122) penetrating the tooth part (120).

2. The dental prosthesis (100) according to claim 1, **characterised in that** the dental Implant (110) is designed in two parts and has a connecting section (113) penetrating the implant body (111) and the abutment (112), as well as a connecting element (115) which can be arranged within the connecting section (113), wherein the closure body (130) can be arranged within the internal guide (122) penetrating the tooth part (120) and opening into the connecting section (113) penetrating the abutment (112),

3. The dental prosthesis (100) according to claim 1 or 2, **characterised in that** the closure body (130) has an external thread (131) and the connecting sleeve (140) has at least one internal thread (141, 142) in order to releasably lock the closure body (130) within the Internal guide (122) penetrating the tooth part (120).

4. The dental prosthesis (100) according to one of the preceding claims, **characterised in that** the closure body (130) has at least one spring element (134) and the connecting sleeve (140) has at least one complementary recess or channel (143) in order to releasably lock the closure body (130) within the internal guide (122) penetrating the tooth part (120).

5. The dental prosthesis (100) according to one of the preceding claims, **characterised in that** the abutment (112) has an external thread (119) for engagement in at least one internal thread (141, 142) of the connecting sleeve (140) in order to releasably connect the dental implant (110) to the connecting sleeve (140).

6. The dental prosthesis (100) according to one of the preceding claims, **characterised in that** a collar section (123) of the tooth part (120) is arranged between the connecting sleeve (140) and the abutment (112) of the tooth implant (110) in order to releasably connect the tooth part (120) and the dental implant (110) to one another by means of the connecting sleeve (140).

7. The dental prosthesis (100) according to one of the preceding claims, **characterised in that** at least one seal is arranged between the closure body (130) and the connecting sleeve (140).

8. The dental prosthesis (100) according to one of the preceding claims, **characterised in that** the closure body (130) has an inner recess (136), in particular an Internal thread, for receiving a core element (137, 138).

9. The dental prosthesis (100) according to one of the preceding claims, **characterised in that** the connecting sleeve (140) has a smooth outer surface and/or the internal guide (122) penetrating the tooth part (120) has a smooth surface.

10. The dental prosthesis (100) according to one of the preceding claims, **characterised in that** the connecting sleeve (140) comprises a material which has a lower hardness than the hardness of the material of the tooth part (120).

11. The dental prosthesis (100) according to one of the preceding claims, **characterised in that** the tooth part (120), the sleeve and/or the closure body are designed with a respective, in particular the same, colouring material component corresponding to a natural tooth colour.

12. A kit for sealing a dental prosthesis (100), in particular a dental prosthesis (100) for anchoring in the jawbone (1), with a closure body (130) and a connecting sleeve (140), wherein the connecting sleeve (140) has a flat outer surface and can be releasably inserted within an internal guide (122) penetrating the dental prosthesis (100) with a flat surface in sliding manner, and wherein the closure body (130) can be releasably locked within the connecting sleeve (140).

13. The kit according to claim 12, **characterised in that** a tooth part (120) is additionally contained, which tooth part (120) is penetrated by an internal guide (122), wherein an outer surface of the connecting sleeve (140) is at least partially bonded to the surface of the internal guide (122) and/or is pressed into the Internal guide (122).

14. The kit according to claims 12 or 13, **characterised in that** an abutment (112) is additionally contained, which abutment (112) can be connected to an Implant body (111) via a connecting element (115) and has an external thread (119) for forming a releasable connection to at least one internal thread (141, 142) of the connecting sleeve (140).

15. The kit according to claim 14, **characterised in that** the connecting sleeve (140) and/or the closure body (130) can be released from the internal guide (122) penetrating the dental prosthesis (100) by means of the connecting element (115).

## Revendications

1. Prothèse dentaire (100) destinée à être ancrée dans l'os maxillaire (1), comprenant
- un implant dentaire (110) avec un corps d'implant (111) et un élément de montage (112),
- un élément dentaire (120) avec un guide intérieur (122) qui traverse l'élément dentaire (120) et
- un corps de fermeture (130) qui peut être disposé à l'intérieur du guide Intérieur (122) traversant l'élément dentaire (120) pour sceller la prothèse dentaire (100),
**caractérisée en ce que**
une douille de liaison (140) est disposée entre le corps de fermeture (130) et le guide intérieur (122) de l'élément dentaire (120), la douille de liaison (140) présentant une surface extérieure plane et le guide intérieur (122) présentant une surface supérieure plane, de sorte que la douille de liaison (140) peut être Insérée de manière coulissante dans le guide intérieur (122) et, au moyen de laquelle douille de liaison (122)
- l'élément dentaire (120) et l'implant dentaire (110) peuvent être reliés l'un à l'autre de manière indirecte et détachable, et
- le corps de fermeture (130) peut être bloqué de manière détachable à l'intérieur du guide intérieur (122) traversant l'élément dentaire (120).

2. Prothèse dentaire (100) selon la revendication 1, **caractérisée en ce que** l'implant dentaire (110) est réalisé en deux parties et comprend un tronçon de liaison (113) traversant le corps d'implant (111) et l'élément de montage (112) ainsi qu'un élément de liaison (115) situé à l'intérieur du tronçon de liaison (113), le corps de fermeture (130) pouvant être placé à l'intérieur du guide intérieur (122) traversant l'élément dentaire (120) et débouchant dans le tronçon de liaison (113) traversant l'élément dentaire (120).

3. Prothèse dentaire (100) selon la revendication 1 ou 2, **caractérisée en ce que** le corps de fermeture (130) présente un filetage extérieur (131) et la douille de liaison (140) présente au moins un filetage intérieur (141, 142) pour permettre au corps de fermeture (130) d'être fixé de façon détachable à l'intérieur du guide intérieur (122) traversant l'élément dentaire (120).

4. Prothèse dentaire (100) selon l'une quelconque des revendications précédentes, **caractérisée en ce que** le corps de fermeture (130) comporte au moins un élément élastique (134) et la douille de liaison (140) comporte au moins un évidement ou rainure complémentaire (143) pour bloquer de manière détachable le corps de fermeture (130) à l'intérieur du guide intérieur (122) traversant l'élément dentaire (120).

5. Prothèse dentaire (100) selon l'une quelconque des revendications précédentes, **caractérisée en ce que** l'élément de montage (112) présente un filetage extérieur (119) destiné à s'engager dans au moins un filetage intérieur (141, 142) de la douille de liaison (140) afin de connecter de manière détachable l'implant dentaire (110) à la douille de liaison (140).

6. Prothèse dentaire (100) selon l'une quelconque des revendications précédentes, **caractérisée en ce qu'**une partie en collerette (123) de l'élément dentaire (120) est disposée entre la douille de liaison (140) et l'élément de montage (112) de l'implant dentaire (110) pour relier l'un à l'autre de manière détachable l'éléments dentaire (120) et l'implant dentaire (110) au moyen de la douille de liaison (140).

7. Prothèse dentaire (100) selon l'une quelconque des revendications précédentes, **caractérisée en ce qu'**au moins un joint d'étanchéité est disposé entre le corps de fermeture (130) et la douille de liaison (140).

8. Prothèse dentaire (100) selon l'une quelconque des revendications précédentes, **caractérisée en ce que** le corps de fermeture (130) présente un évidement intérieur (136), en particulier un filetage intérieur, destiné à recevoir un élément central (137, 138).

9. Prothèse dentaire (100) selon l'une quelconque des revendications précédentes, **caractérisée en ce que** la douille de liaison (140) présente une surface extérieure lisse et/ou le guide intérieur (122) traversant l'élément dentaire (120) présente une surface supérieure lisse.

10. Prothèse dentaire (100) selon l'une quelconque des revendications précédentes, **caractérisée en ce que** la douille de liaison (140) comprend un matériau présentant une dureté inférieure à la dureté du matériau de l'élément dentaire (120).

11. Prothèse dentaire (100) selon l'une quelconque des revendications précédentes, **caractérisée en ce que** l'élément dentaire (120), la douille et/ou le corps de fermeture sont conçus avec une coloration respective, en particulier la même coloration, correspondant à une couleur de dent naturelle.

12. Kit de scellement d'une prothèse dentaire (100), en particulier d'une prothèse dentaire (100) destinée à être ancrée dans l'os maxillaire (1), comprenant un corps de fermeture (130) et une douille de liaison (140), dans lequel la douille de liaison (140) présente une surface extérieure plane et peut être insérée de manière détachable par coulissement à l'intérieur d'un guide intérieur (122) traversant la prothèse dentaire (100) et présentant une surface supérieure plane, et dans lequel le corps de fermeture (130) peut être bloqué de manière détachable à l'intérieur de la douille de liaison (140).

13. Kit selon la revendication 12, **caractérisé en ce qu'**il comprend en outre un élément dentaire (120), lequel élément dentaire (120) est traversé par un guide intérieur (122), dans lequel une surface extérieure de la douille de liaison (140) est au moins partiellement collée à la surface du guide intérieur (122) et/ou pressée dans le guide intérieur (122).

14. Kit selon la revendication 12 ou la revendication 13, **caractérisé en ce qu'**il comprend en outre un élément de montage (112), lequel élément de montage (112) peut être relié à un corps d'implant (111) par l'intermédiaire d'un élément de liaison (115) et présente un filetage extérieur (119) pour former une liaison détachable avec au moins un filetage intérieur (141, 142) de la douille de liaison (140).

15. Kit selon la revendication 14, **caractérisé en ce que** la douille de liaison (140) et/ou le corps de fermeture (130) peut être détaché du guide intérieur (122) traversant la prothèse dentaire (100) au moyen de l'élément de liaison (115).
